# EUROPEAN PATENT SPECIFICATION

(11) **EP 1 193 641 B1**
(45) Date of publication and mention of the grant of the patent: **05.03.2008**
(21) Application number: 01122895.4
(22) Date of filing: 24.09.2001
(51) Int. Cl.: G06K 7/10

(54) **Compact and low cost manufacturing structure of a bar code reader**
Kompakte und kostengünstige Herstellungsstruktur für einen Strichkodeleser
Structure de fabrication bon marché et compacte pour un lecteur de codes à barres

(30) Priority: 27.09.2000 JP 2000294096; 27.09.2000 JP 2000294097
(43) Date of publication of application: 03.04.2002
(73) Proprietor: Denso Corporation, Kariya-city, Aichi-pref., 448-0029 (JP)
(72) Inventor: Itou, Kunihiko, c/o Denso Corporation, Kariya-city, Aichi-pref. 448-0029 (JP); Inagaki, Akihiro, c/o Denso Corporation, Kariya-city, Aichi-pref. 448-0029 (JP); Matsushima, Takeshi, c/o Denso Corporation, Kariya-city, Aichi-pref. 448-0029 (JP); Konosu, Koji, c/o Denso Corporation, Kariya-city, Aichi-pref. 448-0029 (JP); Miyake, Akira, Kariya-city, Aichi-pref. 448-0029 (JP)
(74) Representative: Winter, Brandl, Fürniss, Hübner Röss, Kaiser, Polte Partnerschaft Patent- und Rechtsanwaltskanzlei

(56) References cited:
- US-A- 5 572 008
- US-A- 6 003 775
- US-B1- 6 234 396
- PATENT ABSTRACTS OF JAPAN vol. 1998, no. 01, 30 January 1998 (1998-01-30) -& JP 09 231307 A (OPT ELECTRON:KK), 5 September 1997 (1997-09-05)
- PATENT ABSTRACTS OF JAPAN vol. 016, no. 583 (P-1462), 22 December 1992 (1992-12-22) -& JP 04 233089 A (FUJITSU KIDEN LTD), 21 August 1992 (1992-08-21)

## Description

### BACKGROUND OF THE INVENTION

### 1 Technical Field of the Invention

The present invention relates generally to an information code reader according to the preamble of claim 1 designed to read an information code such as a barcode or a QR code employed in sales management, and more particularly to an improved structure of an information code reader which is compact in size and may be manufactured at low costs.

### 2 Background Art

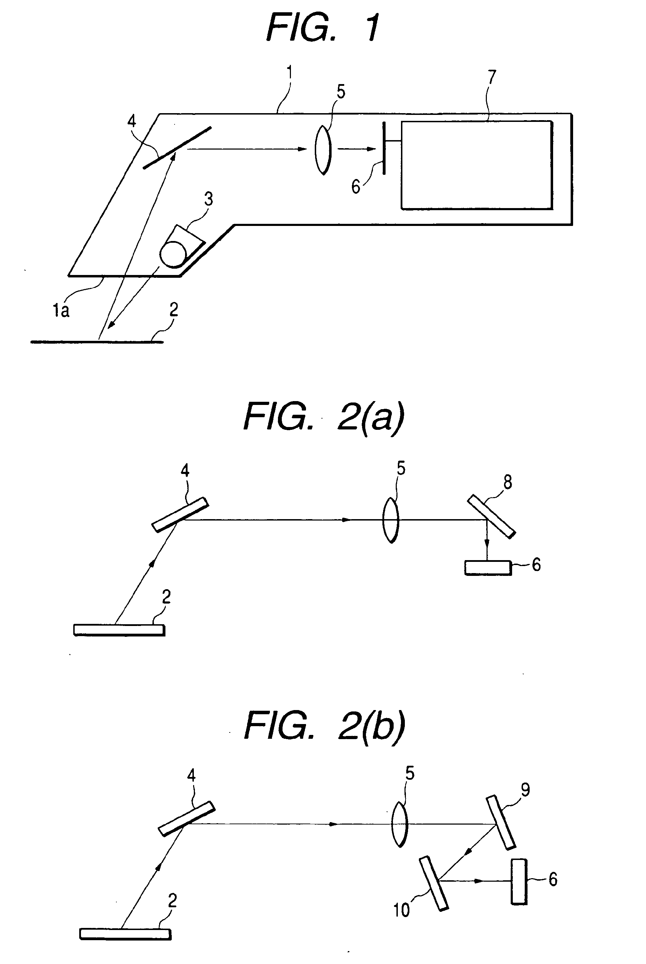

Fig. 1 shows one example of conventional hand-held barcode readers. The barcode reader includes a casing 1 which has a crooked head with a window 1a and a light source 3. The light source 3 emits a beam of light toward a barcode printed on an article 2. A return of the beam enters the window 1a and reaches a linear sensor 6 through an optical system made up of a reflecting mirror 4 and an imaging lens 5. The linear sensor 6 is responsive to the input light to provide a signal indicative signal to a processing circuit 7. The processing circuit 7 decodes the input signal to analyze the barcode.

In this type of barcode reader, the length of an optical path from the article 2 to the linear sensor 6, i.e., an object-to-image distance is relatively great. In the example shown in Fig. 1, the distance between the article 2 and the imaging lens 5 is approximately 90mm. The distance between the imaging lens 5 and the linear sensor 6 is approximately 30mm. The total distance will, thus, be 120mm. The increase in object-to-image distance will result in a difficulty in reducing the overall size of the barcode reader.

In order to reduce the size of the optical system, various attempts have been made heretofore. For instance, a short focal length lens has been proposed to be used as the imaging lens 5. This, however, causes the quantity of light ratio of an illuminated area around the barcode to a peripheral area to be decreased, thus resulting in decreased performance of the lens. When a distant barcode is read, the decreased focal length will also cause the depth of field to be decreased to zero, thus resulting in a decrease in reading ability.

There has been made a proposal to bent, as shown in Fig. 2(a), the optical path between the imaging lens 5 and the linear sensor 6 at 90° using a reflecting mirror 8 or to bent it zigzag, as shown in Fig. 2(b), through two reflecting mirrors 9 and 10 for shortening the distance between the imaging lens 5 and the linear sensor 6. The structures of Figs. 2(a) and 2(b), however, serve to decrease the overall length of the optical system by only several percentages and encounter the complexity of assembling process undesirably, thus resulting in an increase in manufacturing costs.

An information code reader according to the preamble of claim 1 is known from each of US-A-5 572 008 and JP 09-231 307 as well as the corresponding patent abstract of Japan, vol. 1998, January 30,1998.

### SUMMARY OF THE INVENTION

It is therefore the object of the present invention to avoid the disadvantages of the prior art, to provide a compact structure of an information code reader and to provide an improved structure of the information code reader which may be manufactured at low costs.

This object is solved by the measures indicated in claim 1.

Further advantageous modifications of the present invention are subject matter of the dependent claims.

### BRIEF DESPCRIPTION OF THE DRAWINGS

The present invention will be understood more fully from the detailed description given hereinbelow and from the accompanying drawings of the preferred embodiments of the invention, which, however, should not be taken to limit the invention to the specific embodiments but are for the purpose of explanation and understanding only.

In the drawings:
Fig. 1 is a schematic illustration which shows one example of conventional barcode readers;
Figs. 2(a) and 2(b) show proposed means to reduce the size of a structure of an optical system in a conventional barcode reader;
Fig. 3 is a partial sectional view which shows a straight type barcode reader according to the first embodiment of the invention;
Fig. 4 is a partial sectional view which shows a straight type barcode reader according to the first embodiment of the invention;
Fig. 5 is a sectional side view which shows an optical unit installed in each of the barcode readers shown in Figs. 3 and 4;
Fig. 6 is an exploded bottom view of Fig. 5;
Fig. 7 is a side view which shows a straight type barcode reader from which a read window cover is removed;
Fig. 8 is a side view which shows an overall structure of a straight type barcode reader;
Fig. 9 is a side view which shows an overall structure of a crooked type barcode reader;
Fig. 10 is a partial sectional view which shows a straight type one-dimensional code reader according to the second embodiment of the invention;
Fig. 11 is a partial sectional view which shows a crooked type one-dimensional code reader according to the second embodiment of the invention;
Fig. 12 is an exploded bottom view which shows an optical unit installed in each of the code readers of Figs. 10 and 11;
Fig. 13 is a partial sectional view which shows a straight type two-dimensional code reader according to the second embodiment of the invention;
Fig. 14 is a partial sectional view which shows a crooked type two-dimensional code reader according to the second embodiment of the invention;
Fig. 15 is a sectional view which shows an optical unit employed in each of the code readers of Figs. 14 and 15;
Fig. 16 is a front view which shows the optical unit of Fig. 15;
Fig. 17 is a side view which shows an overall structure of a straight type two-dimensional code reader of Fig. 13; and
Fig. 18 is a side view which shows an overall structure of a crooked type two-dimensional code reader of Fig. 14.

### DESCRIPTION OF THE PREFERRED EMBODIMENTS

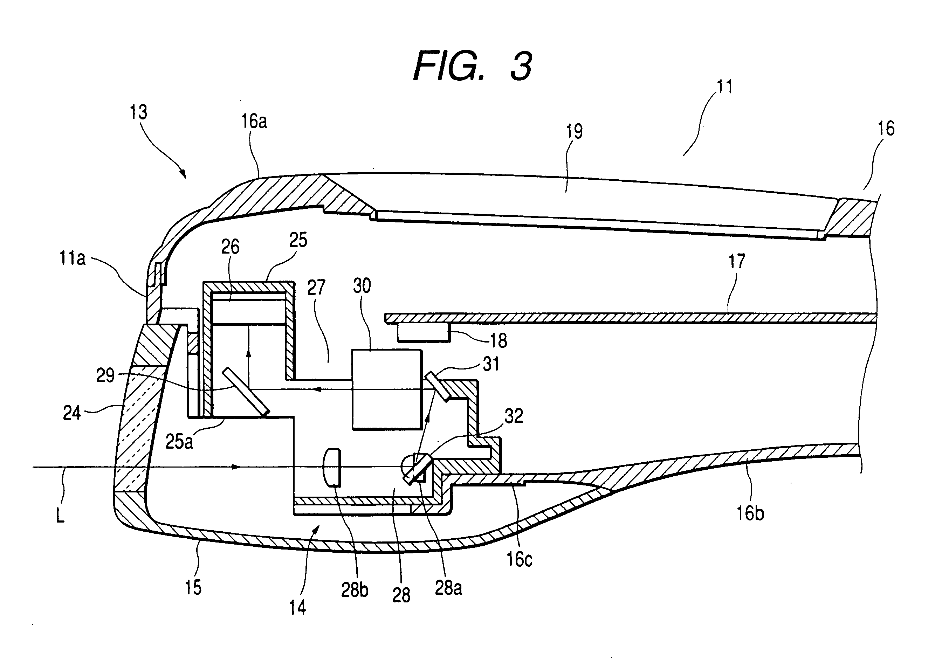

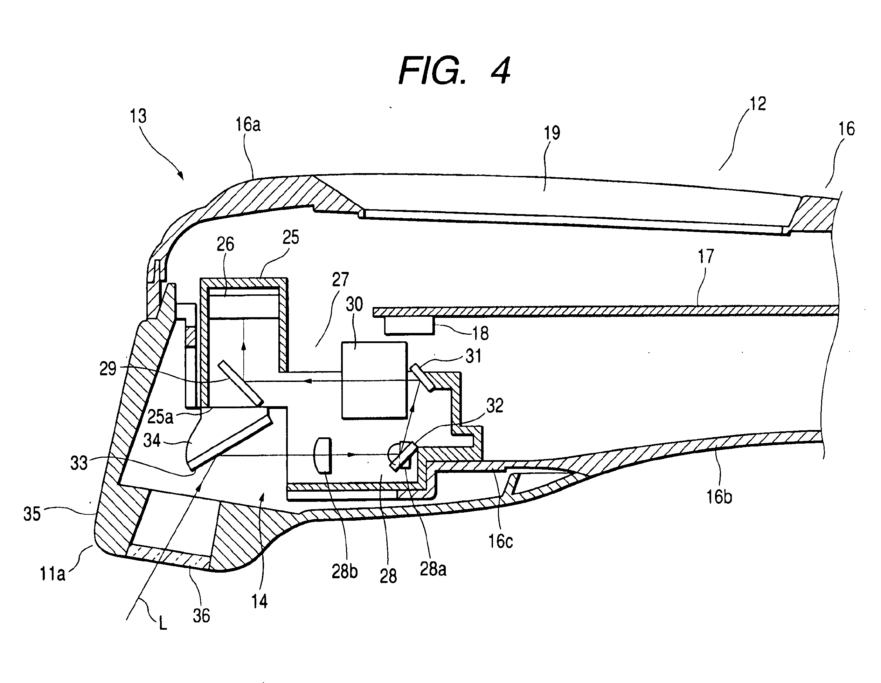

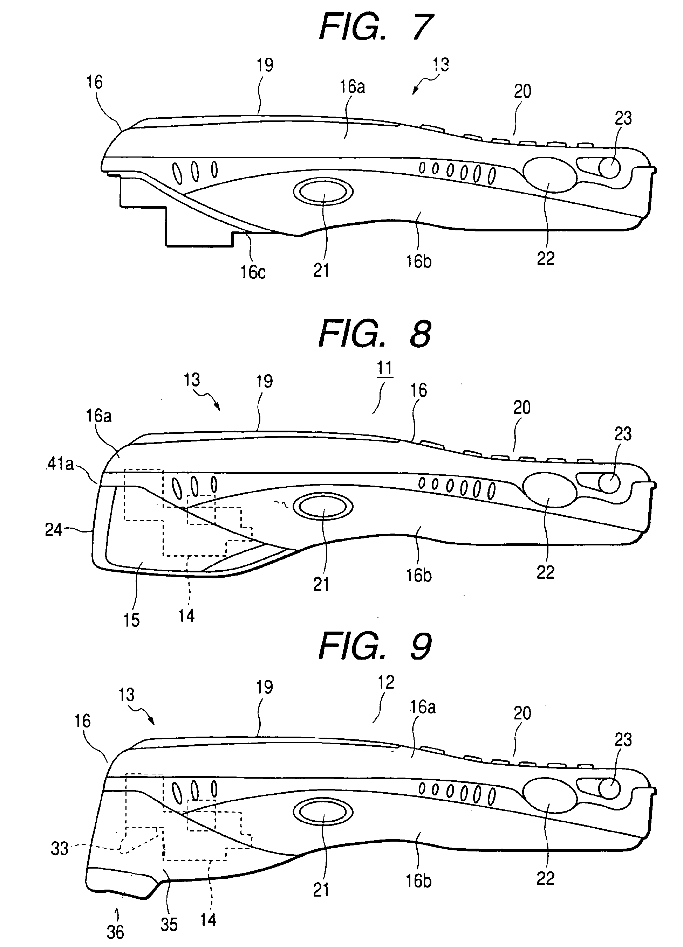

Referring to the drawings, particularly to Figs. 3 to 9, there is shown an information code reader according to the first embodiment of the invention. The following discussion will refer to, as an example, portable hand-held barcode readers called handy terminals which are designed not only to read a barcode printed on an article, but also to decode and store it and establish a data communication with an external device such as a control computer. This embodiment is directed to an improved structure of an optical system which is compact in size and may be used both in a straight type barcode reader 11, as shown in Figs. 3 and 8 and a crooked type barcode reader 12, as shown in Figs. 4 and 9. Like reference numbers refer to like parts throughout several views.

The straight type barcode reader 11, as shown in Fig. 8, is designed to read a one-dimensional information code or a barcode and includes a body 13, an optical unit 14 capturing an image of a barcode printed on an article, and a read window cover 15.

The body 13 includes a casing 16 made up of upper and lower casings 16a and 16b jointed to each other and a main substrate 17 on which microcomputer circuit elements are fabricated to decode an image of a barcode captured by the optical unit 14 and control a whole operation of the barcode reader 11. The main substrate 17 is, as clearly shown in Fig. 3, coupled electrically with the optical unit 14 through a connector 18.

The casing 16 is of elongated configuration allowing a human operator to hold the casing 16 by hand and increases in size as approaching a head 11a as shown on the left side of Fig. 3. The head 11a of the straight type barcode reader 11 has, as clearly shown in Fig. 3, an opening oriented frontward. The head 11a of the crooked type barcode reader 12 has, as clearly shown in Fig. 4, an opening oriented downward. A display 19 such as an LCD is installed in an upper wall of the casing 16 which has a touch panel (not shown). An operator panel 20 which has ten-key switches and function keys is, as shown in Fig. 8, installed on the upper wall of the casing 16 adjacent the display 19. A trigger switch 21, an infrared communication port 22 for establishing an infrared data communication with an external device, and an RS232C interface 23 to be coupled with an external device through a cable are installed in a side wall of the casing 16. A secondary battery (not shown) is mounted in the casing 16.

The lower casing 16b, as clearly shown in Fig. 7, has formed in the head thereof an optical unit mount frame 16c in which the optical unit 14 is fitted. The read window cover 15 is installed on the lower casing 16b to close the opening formed in the head 11a of the casing 16. The read window cover 15 has formed in a front end thereof an opening or window 24 in which a transparent protective plate is fitted.

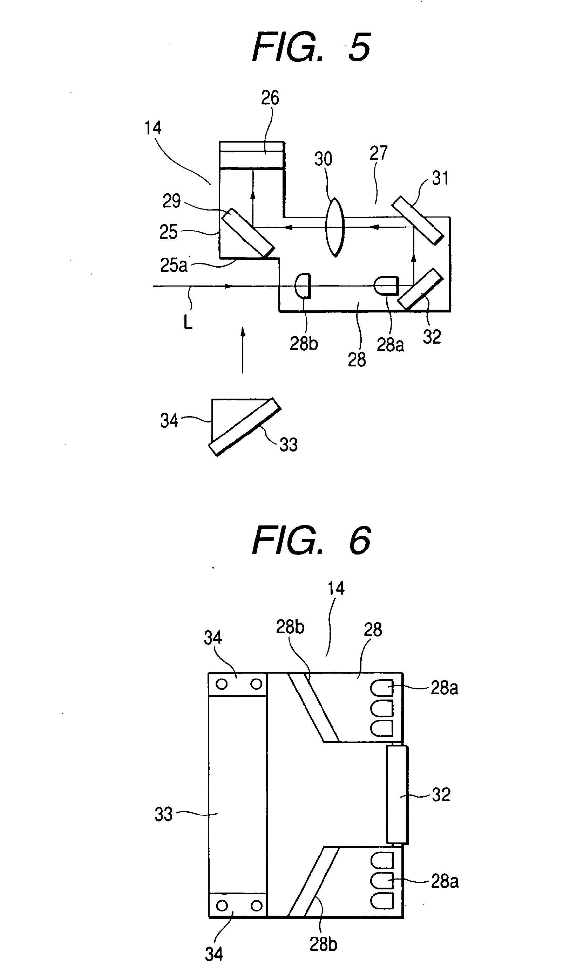

The optical unit 14 is, as shown in Figs. 5 and 6, made up of a synthetic resin casing 25, a linear sensor 26 made of a CCD, an optical mechanism 27 directing the light incoming from the window 24 to the linear sensor 26, and a lighting device 28 emitting a beam of light outside the window 24 for illuminating an area around the barcode.

The casing 25 is of L-shape in cross section, as viewed from the side thereof and has installed in an upward extending portion thereof the linear sensor 26 with a sensitive surface oriented downward. The optical mechanism 27 consists of a first reflecting mirror 29, an imaging lens 30, a second reflecting mirror 31, and a third reflecting mirror 32. The first reflecting mirror 29 is, as clearly shown in Fig. 5, disposed beneath he linear sensor 26 and oriented upward and to the right, as viewed in the drawing. The imaging lens 30 is disposed on the right side of the first reflecting mirror 29. The second reflecting mirror 31 is disposed on the right side of the imaging lens 30 and oriented downward. The third reflecting mirror 32 is disposed beneath the second reflecting mirror 31 and oriented upward and to the left.

The light entering the window 24 from a barcode-printed article is first reflected upward, as viewed in Fig. 5, by the third reflecting mirror 32, directed left by the second reflecting mirror 31, passes through the imaging lens 30, directed upward by the first reflecting mirror 29, and then reaches the linear sensor 26 along an optical path *L.* Specifically, the second and third reflecting mirrors 31 and 32 work to make a U-turn of the incoming light. In this embodiment, the distance between the barcode-printed article and the imaging lens 30 along the optical path *L* is approximately 90mm. The distance between the imaging lens 30 and the linear sensor 26 along the optical path *L* is approximately 30mm.

The lighting device 28 consists of, as shown in Figs. 5 and 6, six LEDs 28a and two lenses 28b. Three of the LEDs 28a are, as clearly shown in Fig. 6, arrayed on the right side of the third reflecting mirror 32, while the other LEDs 28a are arrayed on the left side of the third reflecting mirror 32. Each of the lenses 28b is located in front of one of the arrays of LEDs 28a. The lighting device 28 is so positioned that an optical axis along which the output light travels extends parallel to an optical axis along which a return of the light enters the optical mechanism 27 from the window 24.

The casing 25 has formed on a left corner thereof, as viewed in Fig. 3, a mirror mount base 25a for mounting a fourth reflecting mirror 33, as shown in Fig. 5, detachably. The fourth reflecting mirror 33 works to change the orientation of the light entering the window 24 to the lens 28b and is used in the crooked type barcode reader 12 shown in Fig. 4. The fourth reflecting mirror 33, as clearly shown in Fig. 6, has a length extending horizontally over the arrays of LEDs 28a to direct the light outputted from the lighting device 28 to the window 36. Mount members 34 such as flanges are provided on sides of the fourth reflecting mirror 33 and attached to the mirror mount base 25a of the casing 25 through screws so that the fourth reflecting mirror 33 may be oriented downward and to the right, as viewed in Fig. 4. The fourth reflecting mirror 33 works to define a leading portion of the optical path *L* along which the light entering the window 36 is turned to the third reflecting mirror 32.

The installation of the optical unit 14 in the body 13 is accomplished by fitting the casing 25 in the optical unit mount frame 16c of the casing 16 and joining it using screws. Leads (not shown) extending out of the casing 25 are connected electrically with the connector 18 of the main substrate 17. In the straight type barcode reader 11 of Fig. 3, the light entering the window 24 advances straight toward the optical unit 14.

Fig. 9 illustrates the crooked type barcode reader 12. The optical unit 14 is, like the straight type barcode reader 11, installed within the body 13. The opening formed in the front end of the lower casing 16b is closed by a read window cover 35. The read window cover 35, as can be seen from Figs. 4 and 9, has a portion projecting downward and has formed therein the window 36 closed by a transparent protective plate.

The optical unit 14 has the fourth reflecting mirror 33 mounted on the casing 25. The light entering the window 36 from a barcode-printed article is first reflected horizontally, as viewed in Fig. 4, by the fourth reflecting mirror 33, turned upward by the third reflecting mirror 32, turned left by the second reflecting mirror 31, passes through the imaging lens 30, directed upward by the first reflecting mirror 29, and then reaches the linear sensor 26 along the optical path *L.*

The casing 16 (i.e., the upper and lower casings 16a and 16b) of the crooked type barcode reader 12 is identical in structure with that of the straight type barcode reader 11. The crooked type barcode reader 12 is, therefore, made only by fitting the read window cover 35 in the lower casing 16b and installing the fourth reflecting mirror 33 on the mirror mount 25a of the casing 25 of the optical unit 14, while the straight type barcode reader 11 is made only by fitting the read window cover 15 in the lower casing 16b without installing the fourth reflecting mirror 33 on the optical unit 14. Specifically, the body 13 may be used in either of the straight type barcode reader 11 and the crooked type barcode reader 12, thus allowing the manufacturing costs to be decreased greartly.

The operation of the straight type barcode reader 11 will be described below.

When it is required to read a barcode printed on an article, a human operator holds the barcode reader 11 by hand, manipulates the operator panel 20 to start a barcode reading mode, orients the window 24 toward the barcode, and then turns on the trigger switch 21. Upon turning on of the trigger switch 21, the lighting device 28 emits the light to the barcode. A return of the light from the barcode enters the optical unit 14 through the window 24 and advances to the linear sensor 26 along the optical path *L*. The linear sensor 26 captures an image of the barcode and provides a signal indicative thereof to the main substrate 17. Specifically, the light traveling along the optical path *L* is, as described above, subjected to a U-turn by the third and second reflecting mirrors 32 and 31, passes through the imaging lens 30, and then reaches the linear sensor 26. This allows the overall length of the optical mechanism 27 to be decreased to one-fourth of that of the prior art structure as shown in Fig. 1.

The optical axis of the lighting device 28 is, as described above, defined to extend parallel to the optical axis of the light entering the optical mechanism 27, thereby avoiding a shift in location of an area illuminated by the light outputted form the lighting device 28 caused by a variation in distance between the barcode-printed article and the optical mechanism 27 (i.e., the lighting device 28).

The reflecting mirrors 29, 31, and 32 and the imaging lens 30 of the optical mechanism 27, the linear sensor 26, and the lighting device 28 are all built in the casing 25 as the optical unit 14, thereby facilitating ease of installation of the optical system in the body 13 as compared with the prior art structure shown in Fig. 1.

Next, the operation of the crooked type barcode reader 12 will be described below.

When reading a barcode printed on an article, a human operator holds the barcode reader 12 by hand, orients the window 36 toward the barcode, and then turns on the trigger switch 21. Upon turning on of the trigger switch 21, the lighting device 28 emits the light to the barcode. A return of the light from the barcode enters the optical unit 14 through the window 36 and advances to the linear sensor 26 along the optical path *L*. The linear sensor 26 captures an image of the barcode and provides a signal indicative thereof to the main substrate 17. Specifically, the light outputted from the lighting device 28 is turned downward by the fourth reflecting mirror 36 to illuminate the barcode through the window 36. A return of the light enters the window 36, is directed horizontally by the fourth reflecting mirror 33, turned 180° by the third and second reflecting mirrors 32 and 31, passes through the imaging lens 30, and then reaches the linear sensor 26. The 180° turn of the optical path *L* by the third and second reflecting mirrors 32 and 31 allows the overall length of the optical mechanism 27 to be decreased, like the straight type barcode reader 11.

Further, the optical axis of the lighting device 28 is defined to extend parallel to the optical axis of the light entering the optical mechanism 27, thereby avoiding a shift in location of an area illuminated by the light outputted form the lighting device 28 caused by a variation in distance between the barcode-printed article and the optical mechanism 27 (i.e., the lighting device 28).

The reflecting mirrors 29, 31, and 32 and the imaging lens 30 of the optical mechanism 27, the linear sensor 26, and the lighting device 28 are all built in the casing 25 as the optical unit 14, thereby facilitating ease of installation of the optical system in the body 13 as compared with the prior art structure shown in Fig. 1.

The structure of the optical system in each of the barcode readers 11 and 12 may also be employed in handy barcode readers designed only to read a barcode and output a signal indicative thereof to a host computer for decoding the barcode or stationary barcode readers.

The linear sensor 26 may be aligned with the imaging lens 30 without use of the first reflecting mirror 29. The optical axis of the lighting device 28 may alternatively be shifted from that of the reflected light traveling along the optical path *L*. A maker light source may also be installed in the optical unit 14 which emits beams of marker light indicating an area where a barcode is to be read.

The second embodiment will be described below which provides an improved structure of an optical system which may be employed both in one-dimensional code readers and two-dimensional code readers.

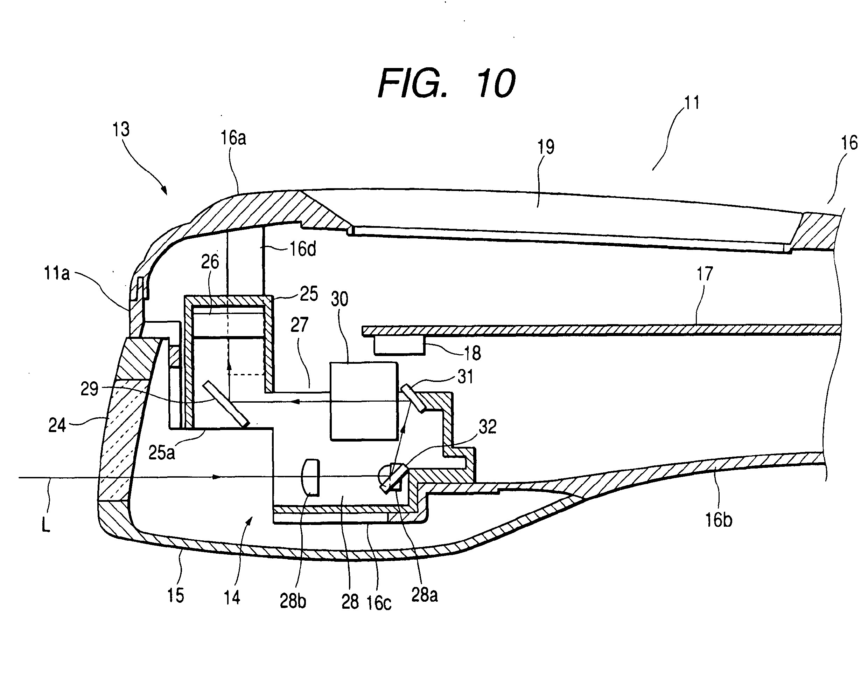

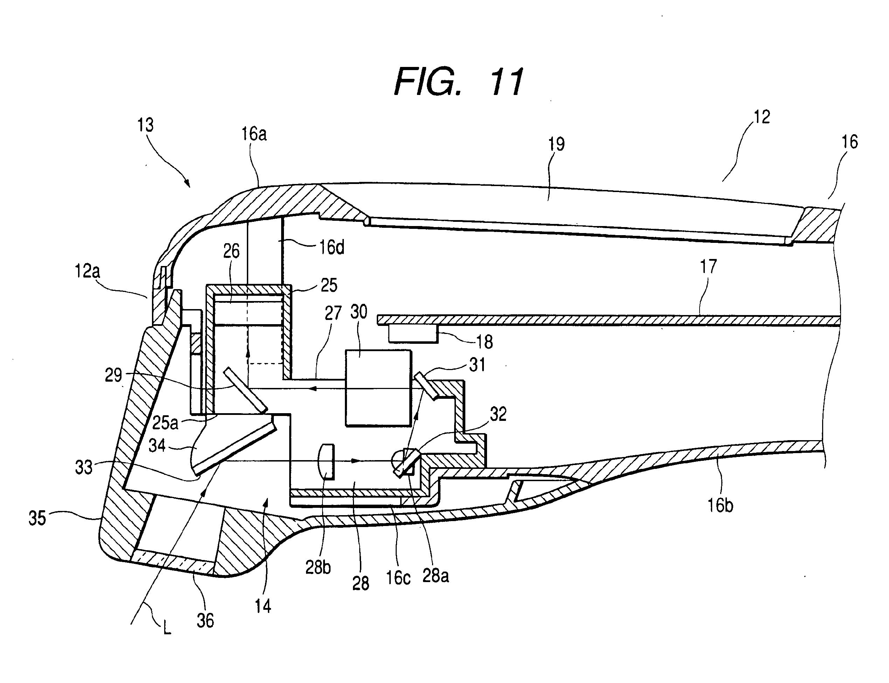

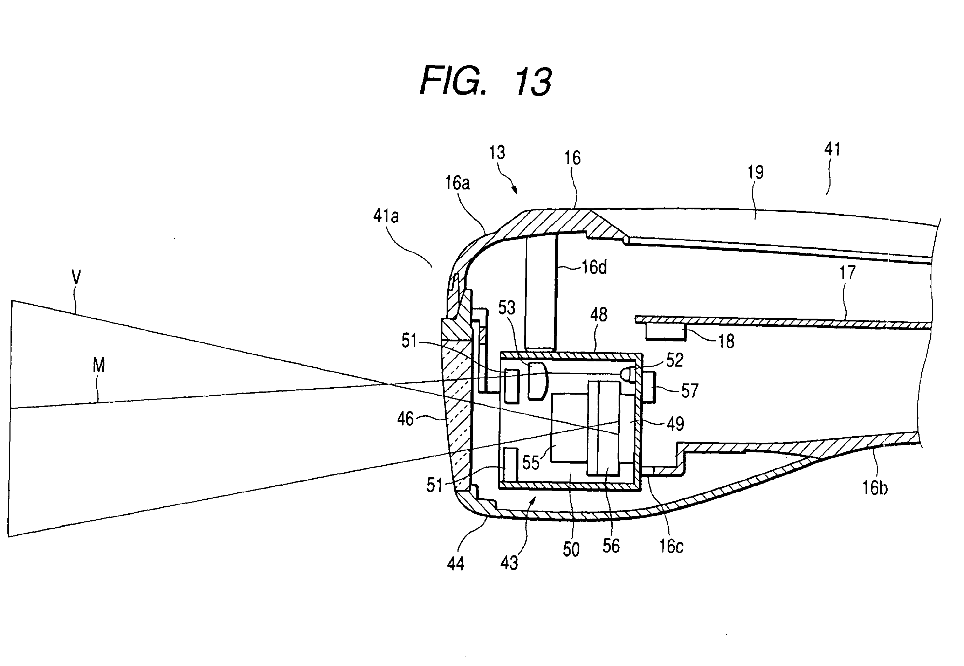

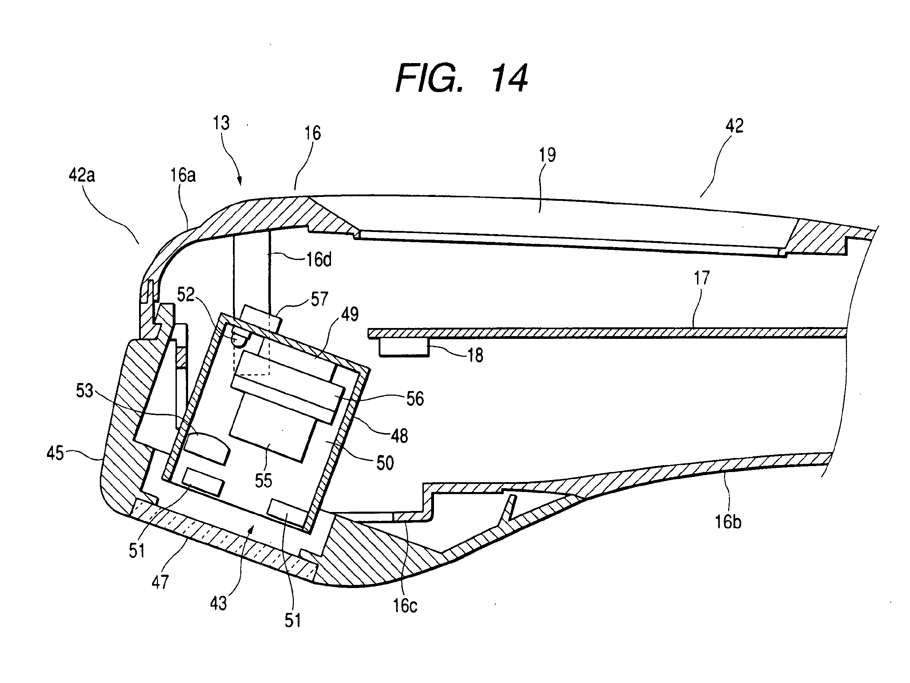

Fig. 10 shows a straight type one-dimensional code reader 11 similar to the one shown in Fig. 3. Fig. 11 shows a crooked type one-dimensional code reader 12 similar to the one shown in Fig. 4. Fig. 13 shows a straight type two-dimensional code reader 41 designed to read a two-dimensional information code such as a QR code as well as a one-dimensional code such as a barcode. Fig. 14 shows a crooked type two-dimensional code reader 42 designed to read a two-dimensional information code such as a QR code as well as a one-dimensional code such as a barcode. The code readers 11, 12, 41, and 42 are designed not only to read a code printed on an article, but also to decode and store it and establish a data communication with an external device such as a control computer. The same reference numbers as employed in the first embodiment refer to the same parts, and explanation thereof in detail will be omitted here.

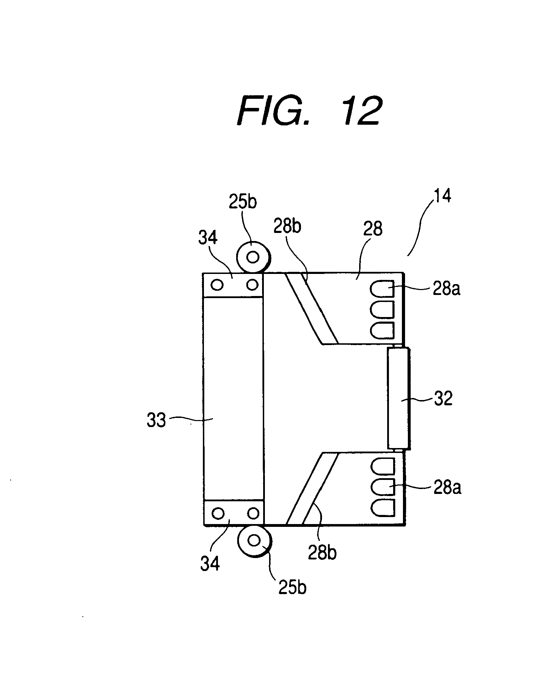

The straight type one-dimensional code reader 11 includes the casing 16 made up of the upper and lower casings 16a and 16b. The lower casing 16b has formed in the head thereof an optical unit mount frame 16c in which the optical unit 14 is fitted. The upper casing 16a has formed in the head thereof a pair of bosses 16d which extend downward, as viewed in Fig. 10, from an upper inner wall of the casing 16 for mounting the optical unit 14 using screws. The casing 25 of the optical unit 14 has formed integrally on side walls thereof mounting cylinders 25b, as shown in Fig. 12, which extend in alignment with the bosses 16d and have formed therein through holes into which the screws are fitted to secure the optical unit 14 to the upper casing 16a.

The casing 25, like the first embodiment, has formed therein the mirror mount base 25a for mounting the fourth reflecting mirror 33 detachably. The fourth reflecting mirror 33 is employed only in the crooked type code reader 12 and works to change the orientation of the light entering the window 24 to the lens 28b.

The installation of the optical unit 14 in the body 13 is accomplished by fitting the casing 25 in the optical unit mount frame 16c of the casing 16, aligning the mounting cylinders 25b with lower ends of the bosses 16d of the upper casing 16a, and inserting screws into the bosses 16d through the mounting cylinders 25b.

Other arrangements are identical with those shown in Figs. 3 to 9, and explanation thereof in detail will be omitted here.

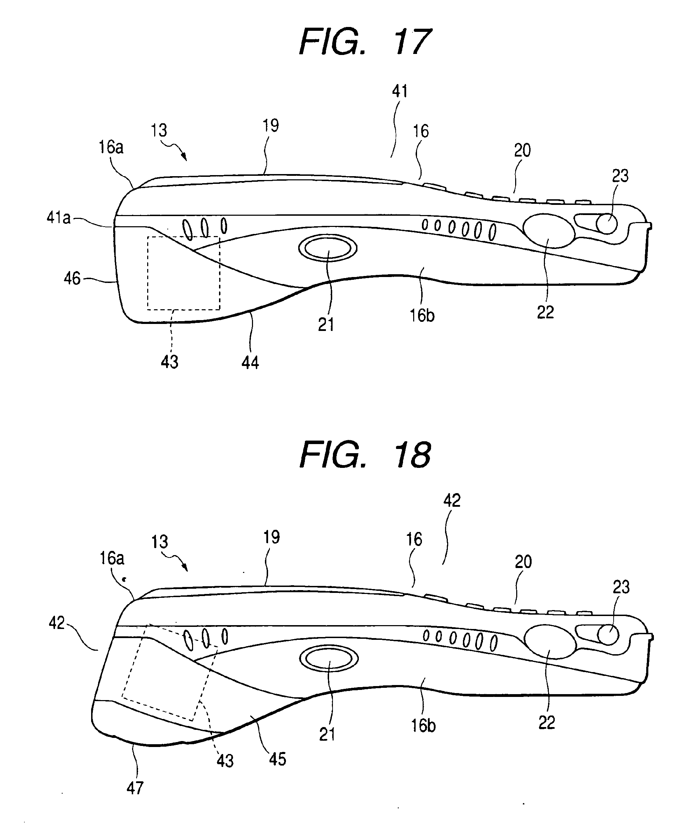

Fig. 17 shows an overall structure of the straight type two-dimensional code reader 41 designed to emit the light straight in a lengthwise direction thereof to read a two-dimensional information code such as a QR code as well as a one-dimensional code such as a barcode. Fig. 18 shows an overall structure of the crooked type two-dimensional code reader 42 designed to emit the light downward to read a two-dimensional code like the straight type two-dimensional code reader 41.

The straight type two-dimensional code reader 41 is, as can be seen in Fig. 13, identical in structure with each of the ones in Figs. 10 and 11 except the optical unit 43 installed in the body 13 and the read window cover 44 fitted in a lower portion of the head 41 a of the casing 16. Similarly, the crooked type two-dimensional code reader 42 is, as can be seen in Fig. 14, identical in structure with each of the ones of Figs. 10 and 11 except the optical unit 43 installed in the body 13 and the read window cover 45 fitted in a lower portion of the head 42a of the casing 16.

The read window cover 44 of the straight type two-dimensional code reader 41 has formed in a front end thereof a window 46 in which a transparent dustproof plate is fitted. The read window cover 45 of the crooked type two-dimensional code reader 42 has formed in a lower wall thereof, as viewed in Fig. 14, a window 47 in which a transparent dustproof plate is fitted.

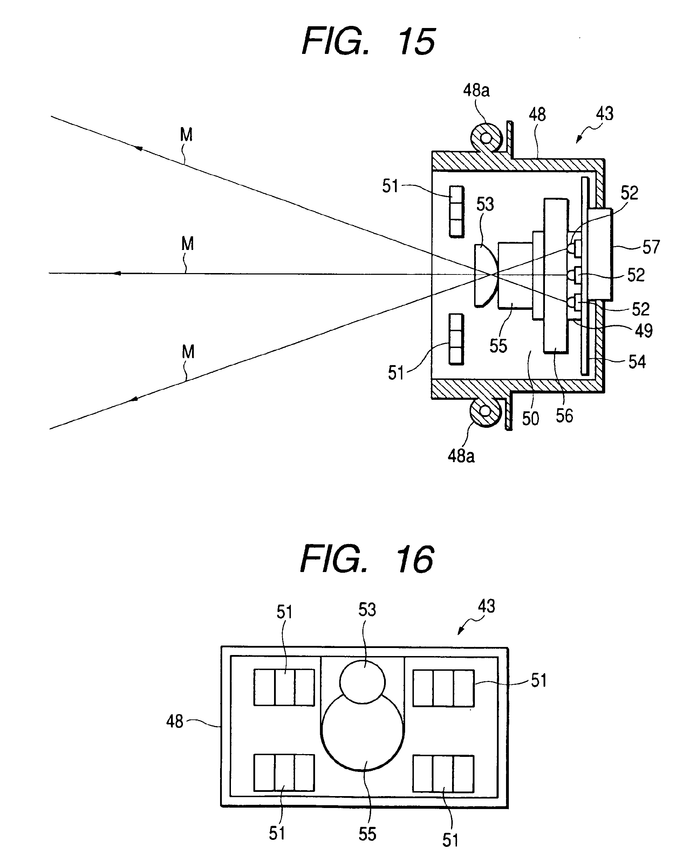

The optical unit 43 is common to the straight type two-dimensional code reader 41 and the crooked type two-dimensional code reader 42 and, as clearly shown in Figs. 15 and 16, consists of a box-like casing 48, a two-dimensional sensor 49 (also called an area sensor), an optical system 50, a lighting device made up of a plurality of LEDs 51, three maker LEDs 52, and a marker lens 53. The maker LEDs 52 emit beams *M* as markers indicating an area where an information code is to be read.

The area sensor 49 is fabricated on a substrate 54 installed on a side wall of the casing 48. The optical system 50 consists of an imaging lens 55 and a cylindrical mirror 56 and is mounted on the front of the area sensor 49. The area sensor 49 is designed to capture an image of an information code within a field of view *V*, as shown in Fig. 13. The LEDs 51 of the lighting device are, as clearly shown in Fig. 16, arrayed in units of three on upper, lower, right, and left sides of the imaging lens 55 near an opening of the casing 48.

The three marker LEDs 52 are, as clearly shown in Figs. 13 and 15, arrayed horizontally above the area sensor 49. The marker lens 53 is, as can be seen in Fig. 16, disposed ahead of the LEDs 52 above the imaging lens 55. The LEDs 52 emit the beams *M* through the marker lens 53 horizontally, thereby forming three spots in line on an area where an information code is to be read. A connector 57 is installed in a rear wall of the casing 48 which is coupled electrically with the connector 18 of the main substrate 17 through leads or a harness (not shown).

The upper casing 16a has formed on an inner wall thereof a pair of bosses 16d which extend downward, as viewed in Figs. 13 and 14, for securing the optical unit 43 to the upper casing 16a using screws. The casing 48 of the optical unit 43, as clearly shown in Fig. 15, has formed integrally on side walls thereof a pair of mounting cylinders 48a which are aligned with the bosses 16d, respectively, when the optical unit 43 is fitted in the lower casing 16b. The mounting cylinders 48a have formed therein through holes into which the screws are fitted to establish firm connections of the mounting cylinders 48a to the bosses 16d for securing the optical unit 43 to the upper casing 16a. In a case of installation of the optical unit 43 in the straight type two-dimensional code reader 41, the mounting cylinders 48a are formed on the casing 48 so as to extend substantially parallel to the rear wall of the casing 48 so that the opening of the optical unit 43 may be oriented forward, as shown in Fig. 13, to the window 46. In a case of installation of the optical unit 43 in the crooked type two-dimensional code reader 42, the mounting cylinders 48a are formed on the casing 48 at a given angle to the rear wall of the casing 48 so that the opening of the optical unit 43 may be oriented downward, as shown in Fig. 14, to the window 47. These two types of mounting cylinders 48a may alternatively be formed on the casing 48 together. This allows the single type of casing 48 to be employed both in the straight type and crooked type two-dimensional code readers 41 and 42.

The operation of the straight type two-dimensional code reader 41 will be described below.

When it is required to read a two-dimensional code such as a QR code printed on an article, a human operator first holds the barcode reader 11 by hand and manipulates the operator panel 20 to start a code reading mode. The optical unit 43 emits three marker beams *M* through the window 46. The operator then orients the window 46 to the code so that a central one of the marker beams *M* may illuminate the center of the code and turns on the trigger switch 21. Upon turning on of the trigger switch 21, the LEDs 51 are activated to emit the light to the code. A return of the light from the code enters the optical unit 43 through the window 46 and advances to the area sensor 49 through the optical system 50. The area sensor 49 captures an image of the code and provides a signal indicative thereof to the main substrate 17.

The operation of the crooked type two-dimensional code reader 42 is substantially the same as that of the straight type two-dimensional code reader 41, and explanation thereof in detail will be omitted here.

As apparent from the above discussion, the straight type one-dimensional code reader 11 of Fig. 10 is identical in structure with the crooked type one-dimensional code reader 12 of Fig. 11 except the read window cover 15. The straight type two-dimensional code reader 41 of Fig. 13 is identical in structure with the crooked type two-dimensional code reader 42 of Fig. 14 except the read window cover 44 and the orientation of the mounting cylinders 48a. The straight type and crooked type one-dimensional code readers 11 and 12 are identical in structure with the straight type and crooked type two-dimensional code readers 41 and 42 except the read window covers 15 and 35 and the optical unit 14. Specifically, the four different types code readers 11, 12, 41, and 42 may be made only by installing the read window covers 15, 35, 44, and 45 and the optical units 14 and 43 in the common bodies 13, respectively. The manufacturing costs of the code readers 11, 12, 41, and 42 may, therefore, be decreased greatly.

Instead of the four different types of read window covers 15, 35, 44, and 45, two types of read window covers common in structure to the straight type code readers 11 and 41 and the crooked type code readers 12 and 42 may be used. This also allows the manufacturing costs to be decreased further.

Each of the read window covers 15, 35, 44, and 45 may be formed integrally on a corresponding one of the casing 25 of the optical unit 14 and the casing 48 of the optical unit 43, thereby allowing an assembly of each of the read window covers 15, 35, 44, and 45 and a corresponding one of the optical units 14 and 43 to be installed in the casing 16 in a single assembling process.

The structure of the optical system in each of the code readers 11, 12, 41, and 42 may also be employed with handy terminals designed only to read an information code and output a signal indicative thereof to a host computer for decoding the information code or stationary code readers.

The linear sensor 26 of the optical unit 14 may be aligned with the imaging lens 30 without use of the first reflecting mirror 29. The marker LEDs 52 and the marker lens 53 of the optical unit 43 may be omitted. The marker LEDs 52 may also be installed in the optical unit 14 of each of the one-dimensional code readers 11 and 12.

## Claims

1. An information code reader comprising:
a reader body (13) having a head (41 a, 42a), said reader body (13) has a length and an opening formed in said head (41 a, 42a) thereof;
a light source emitting light to an information code recorded on an object;
an optical sensor (26) disposed within said reader body (13), said optical sensor (26) being responsive to an input of a return of the light from said information code through a window (24, 36, 46, 47) formed within a cover (15, 35, 44, 45) to provide a signal indicative thereof; and
an optical mechanism (27) disposed within said reader body (13) to define an optical path along which said return of the light travels from said window (24, 36, 46, 47) to said optical sensor (26), said optical mechanism (27) including a plurality of reflecting mirrors (29 to 32) arranged to reverse orientation of said optical path between said window (24, 36, 46, 47) and said optical sensor (26),
***characterized in that***
said opening formed in said head (41 a, 42a) of said reader body (13) is adapted to exchangeably fit thereto a first cover designed to form said window (24, 36, 46, 47) in an end wall of said reader body (13) to define said head (41 a, 42a) of said reader body (13) straight and a second cover designed to form said window (24, 36, 46, 47) in a side wall of said reader body (13) to define said head (41 a, 42a) of said reader body (13) to be crooked, and
said optical mechanism (27) is disposed within a casing (25, 48) as an optical unit (14, 43), said casing (25, 48) having a mirror mount (25a) on which a reflecting mirror (33) serving to turn said return of light inputted from said window (46, 47) to said optical mechanism (27) is detachably mounted in case of using said second cover.

2. An information code reader as set forth in claim 1, ***characterized in that*** said optical unit (14, 43) is attached integrally to said cover (15, 35, 44, 45).

3. An information code reader as set forth in claim 1, ***characterized in that*** said optical mechanism (27) includes a marker light source (52) designed to emit a marker light which provides for ease of alignment of said head (41 a, 42a) of said reader body (13) with said information code.

## Patentansprüche

1. Informationscodeleser, der aufweist:
ein Lesergehäuse (13), das einen Kopf (41 a, 42a) aufweist, wobei das Lesergehäuse (13) eine Länge und eine in dem Kopf (41 a, 42a) von diesem ausgebildete Öffnung aufweist;
eine Lichtquelle, die Licht zu einem Informationscode abgibt, der auf einem Objekt aufgezeichnet ist;
einen optischen Sensor (26), der in dem Lesergehäuse (13) angeordnet ist, wobei der optische Sensor (26) auf eine Eingabe eine Rückgabe des Lichts von dem Informationscode über ein in einer Abdeckung (15, 35, 44, 45) ausgebildetes Fenster (24, 36, 46, 47) reagiert, um ein diesen anzeigendes Signal vorzusehen; und
einen optischen Mechanismus (27), der in dem Lesergehäuse (13) angeordnet ist, um einen optischen Pfad zu definieren, entlang welchem die Rückgabe des Lichts von dem Fenster (24, 36, 46, 47) zu dem optischen Sensor (26) geht, wobei der optische Mechanismus (27) eine Mehrzahl von reflektierenden Spiegeln (29 bis 32) beinhaltet, die angeordnet sind, um eine Ausrichtung des optischen Pfads zwischen dem Fenster (24, 36, 46, 47) und dem optischen Sensor (26) umzukehren,
***dadurch gekennzeichnet, dass***
die in dem Kopf (41a, 42a) des Lesergehäuses (13) ausgebildete Öffnung dazu ausgelegt ist, austauschbar daran eine erste Abdeckung, die dazu ausgelegt ist, das Fenster (24, 36, 46, 47) in einer Endwand des Lesergehäuses (13) auszubilden, um den Kopf (41 a, 42a) des Lesergehäuses (13) gerade zu definieren, und eine zweite Abdeckung zu befestigen, die dazu ausgelegt ist, das Fenster (24, 36, 46, 47) in einer Seitenwand des Lesergehäuses (13) auszubilden, um den Kopf (41 a, 42a) des Lesergehäuses (13) gekrümmt zu definieren, und
der optische Mechanismus (27) als eine optische Einheit (14, 43) in einem Gehäuse (25, 48) angeordnet ist, wobei das Gehäuse (25, 48) eine Spiegelhalterung (25a) aufweist, auf welcher in einem Fall eines Verwendens der zweiten Abdeckung ein reflektierender Spiegel (33) abnehmbar angebracht ist, der dazu dient, die Rückgabe des Lichts, das von dem Fenster eingeben wird, zu dem optischen Mechanismus (27) zu richten.

2. Informationscodeleser nach Anspruch 1, ***dadurch gekennzeichnet, dass*** die optische Einheit (14, 43) intergal an der Abdeckung (15, 35, 44, 45) angebracht ist.

3. Informationscodeleser nach Anspruch 1, ***dadurch gekennzeichnet, dass*** der optische Mechanismus (27) eine Markierungslichtquelle (52) beinhaltet, die dazu ausgelegt ist, ein Markierungslicht abzugeben, welches eine Einfachheit einer Ausrichtung des Kopfs (41 a, 42a) des Lesergehäuses (13) zu dem Informationscode vorsieht.

## Revendications

1. Lecteur de code d'information comprenant :
un corps de lecteur (13) ayant une tête (41a, 42a), ledit corps de lecteur (13) présente une longueur et une ouverture formée dans ladite tête (41a, 42a) de celui-ci ;
une lumière émettant une source de lumière vers un code d'information enregistré sur un objet;
un capteur optique (26) disposé à l'intérieur dudit corps de lecteur (13), ledit capteur optique (26) étant sensible à une entrée d'un retour de la lumière à partir du code d'information par une fenêtre (24, 36, 46, 47) formée à l'intérieur d'un couvercle (15, 35, 44, 45) pour fournir un signal indicatif de celui-ci ; et
un mécanisme optique (27) disposé à l'intérieur dudit corps de lecteur (13) pour définir un chemin optique le long duquel ledit retour de la lumière se déplace à partir de ladite fenêtre (24, 36, 46, 47) vers ledit capteur optique (26), ledit mécanisme optique (27) comprenant une pluralité de miroirs réfléchissants (29 à 32) disposés suivant l'orientation inverse dudit chemin optique entre ladite fenêtre (24, 36, 46, 47) et ledit capteur optique (26),
**caractérisé en ce que** :
ladite ouverture formée dans ladite tête (41a, 42a) dudit corps de lecteur (13) est capable de s'adapter de façon interchangeable sur un premier couvercle conçu pour former ladite fenêtre (24, 36, 46, 47) dans une paroi d'extrémité dudit corps de lecteur (13) pour définir ladite tête (41a, 42a) dudit corps de lecteur (13) directement, et un second couvercle conçu pour former ladite fenêtre (24, 36, 46, 47) dans une paroi latérale dudit corps de lecteur (13) pour définir ladite tête (41a, 42a) dudit corps de lecteur (13) en forme de crochet, et
ledit mécanisme optique (27) est disposé à l'intérieur d'un boîtier (25, 48) en tant qu'unité optique (14, 43), ledit boîtier (25, 48) comportant un montage de miroir (25a) sur lequel est monté de façon amovible un miroir réfléchissant (33) servant à faire tourner ledit retour de lumière reçue par ladite fenêtre (46, 47) vers le mécanisme optique (27) en cas d'utilisation du second couvercle.

2. Lecteur de code d'information tel que défini dans la revendication 1, **caractérisé en ce que** ladite unité optique (14, 43) est fixée solidairement sur ledit couvercle (15, 35, 44, 45).

3. Lecteur de code d'information tel que défini dans la revendication 1; **caractérisé en ce que** ledit mécanisme optique (27) comprend une source de lumière de marqueur (52) conçue pour émettre une lumière de marqueur qui facilite l'alignement de ladite tête (41a, 42a) dudit corps de lecteur (13) sur ledit code d'information.
